# EUROPEAN PATENT SPECIFICATION

(11) **EP 3 447 030 B1**
(45) Date of publication and mention of the grant of the patent: **01.01.2020**
(21) Application number: 18189836.2
(22) Date of filing: 20.08.2018
(51) Int. Cl.: C02F 1/52, C02F 1/66, C02F 103/22, C02F 103/32, C02F 101/34, C02F 101/30

(54) **PROCESS OF TREATMENT OF AGROINDUSTRIAL WASTE WATER BY REACTION OF ACIDIFICATION WITH ADDITION OF STRONG ACIDS**
VERFAHREN ZUR BEHANDLUNG VON AGROINDUSTRIELLEM ABWASSER DURCH ANSÄUERUNGSREAKTION UNTER ZUSATZ VON STARKEN SÄUREN
PROCÉDÉ DE TRAITEMENT D'EAUX RÉSIDUELLES AGRO-INDUSTRIELLES PAR RÉACTION D'ACIDIFICATION AVEC ADDITION D'ACIDES FORTS

(30) Priority: 21.08.2017 PT 2017110261
(43) Date of publication of application: 27.02.2019
(73) Proprietor: Instituto Politécnico de Beja, 7800-295 Beja (PT); Cebal - Centro De Biotecnologia Agrícola E Agro-Alimentar Do Alentejo, 7801-908 Beja (PT)
(72) Inventor: PRAZERES, Ana, 7800-631 CABEÇA-GORDA (PT); LUZ, Silvana, 7600-058 ALJUSTREL (PT); FERNANDES, Flávia, 2000-210 SANTARÉM (PT); AFONSO, Alexandra, 7830-420 SERPA (PT); GUERREIRO, Raquel, 7800 BEJA (PT); MADEIRA, Luís, 8000-319 FARO (PT); ALMEIDA, Maria, 7800-850 BEJA (PT); ALVES, Eliana, 7670-283 OURIQUE (PT); CARVALHO, Maria, 7800-295 BEJA (PT)
(74) Representative: Oliveira Lourenço, Nuno Miguel

(56) References cited:
- GB-A- 2 206 342
- PT-A- 109 217
- US-A- 6 132 625
- US-A1- 2010 059 450

## Description

### Technical domain of the invention

The present invention relates to a process for the treatment of agro-industrial waste water, preferably from slaughterhouses, olive oil presses, cheese industries or wine producing facilities by reaction of acidification with the addition of strong acids, selected from sulfuric, hydrochloric or nitric acid.

The application of this process to treatment waste water reduces the level of contamination in terms of organic matter, including dissolved organic matter, monitored by chemical oxygen demand (total and dissolved COD), chemicals such as phosphorus, calcium and magnesium, turbidity, total phenols and characteristic absorbances.

Accordingly, the present invention is in the technical field of treatment of effluents from agro-food industries.

### Background of the invention

Agro-industrial wastewater treatment is a difficult task because of its level of contamination in terms of organic matter, suspended solids, oils and fats, and chemical elements. In addition, these effluents can have variable pH values and high levels of salinity.

In this regard, agro-industrial effluents can lead to serious environmental and public health problems, such as soil contamination, eutrophication phenomena, rapid depletion of oxygen in surface waters, and groundwater contamination.

The management of agro-industrial wastewater has occurred through application to the soil, mixing with other less contaminated effluents, and storage and evaporation in ponds.

Some physico-chemical processes have also been applied to reduce the level of contamination, such as: dissolved air flotation, coagulation-flocculation, basic precipitation, membrane technologies, advanced oxidation and electrochemical processes.

The article "Prazeres et al., 2011. Cheese whey wastewater treatment by acidic precipitation. Proceedings of the XIV World Water Congress, International Water Resources Association and Water and Energy Resources Secretariat of Pernambuco State, September, Porto de Galinhas-PE, Brazil." discloses a process by acid precipitation using H₂SO₄ at a pH value of 1 to 3 for treating wastewater originated out of dairy farms. These waters produce sludge through flocculent sedimentation and the removal of organic matter, suspended solids, turbidity, absorbances and chemicals is observed. In this article, optimum conditions are achieved only at extreme pH conditions (pH = 1.0) and the process is carried out in two steps: the addition of H₂SO₄ at pH values ranging from 1 to 3 under conditions similar to coagulation-flocculation, and sedimentation of the precipitate. However, the removal of the contaminants as described above by this process is not sufficiently effective, which removes only 21% of COD at conditions of pH = 1.0.

The article "Babel and Kurniawan (2004). Cr (VI) removal from synthetic wastewater using coconut shell charcoal and commercial activated carbon modified with oxidizing agents and / or chitosan. Chemosphere 54 (7), 951-967." discloses the chemical modification of the surface of coconut shell and commercial activated charcoal through the use of chitosan and / or oxidizing agents such as sulfuric acid and nitric acid. Modifications were performed as follows: washing of surfaces with ultrapure water for leaching of impurities, treatment with oxidizing agent (2% H₂SO₄ and 65% for HNO₃) in an incubator at 110°C during a large period of time (24 h for H₂SO₄ and 3h for HNO₃), cooling and drainage of the acid solution, washing with ultrapure water until pH stabilization, residual acid removal by use of a NaHCO₃ (2%) solution, oven drying overnight at 110°C, cooling to room temperature and desiccator storage. Also this process does not remove the relevant compounds, such as organic matter (especially dissolved organic matter), chemicals such as phosphorus, calcium and magnesium, turbidity, total phenols and characteristic absorbances.

The documents US2010/0059450, US6132625 and GB2206342 are further examples of known processes for the treatment of wastewater from agro-industries, in particular by acidification, flocculation and/or precipitation.

There is a great need to develop and implement wastewater treatment processes from agro-industries, which remove contaminants efficiently, quickly and inexpensively, especially with regard to the removal of dissolved organic matter.

The process of the present invention proposes to solve this problem by adding strong acids to the wastewaters to be treated.

### Summary of the invention

The present invention relates to a process for the treatment of waste water from agro-industrial facilities, in particular from slaughterhouses, olive oil presses, cheese industries or wine producing facilities by reaction of acidification with the addition of strong acids under agitation conditions, and precipitation, according to claim 1.

The application of this process to agro-industrial wastewater reduces its level of contamination in terms of organic matter, including dissolved organic matter, monitored by chemical oxygen demand (total and dissolved COD), chemicals such as phosphorus, calcium and magnesium, turbidity, total phenols and characteristic absorbances of this type of wastewater.

In addition, the resulting sludge may be reused, for example, as a fertilizer in agriculture because of the high content of organic matter and nutrients.

### General description of the invention

The present invention relates to a process for the treatment of waste water from agro-industrial facilities, in particular slaughterhouses, olive oil presses, cheese industries or wine producing facilities, by reaction of acidification processes with addition of strong acids, selected from sulfuric acid, hydrochloric acid or nitric acid.

The addition of concentrated solutions of strong acids to raw agro-industrial wastewater, i.e. without any previous treatment, achieving a pH value of 1 to 6 under stirring conditions is obtained with three types of decreasing sequential velocity, namely, fast, medium and slow, for at least 3 minutes in total under ambient conditions, leads to the formation of precipitate of particle agglomerates. After sedimentation for a minimum time of about 2 hours, the phases can be then separated.

The proposed treatment process reduces the organic load, including dissolved organic matter, and chemicals from raw agro-industrial wastewater, reducing COD, including dissolved COD, phosphorus, calcium, magnesium, turbidity, total phenols and characteristic absorbances.

During the application of this process there is also the formation of precipitates, also called sludge, with different physicochemical characteristics according to the type of water, process applied and operating conditions. These precipitates comprise recoverable or reusable compounds such as organic matter and nutrients which may be used, for example, in agriculture.

The proposed process of treatment has several benefits over conventional processes, which are listed below:
- It can be applied to raw waste water, i.e. it is not necessary to pre-treat the waste water in order to apply the process;
- It is easy to apply and control, adapting itself to the physical-chemical and biological properties of the raw waste water;
- It is applied under ambient conditions, i.e. at ambient pressure and temperature with presence of light and atmospheric air, thus not requiring manipulation of the environment in which the treatment takes place;
- It can be used as pre-treatment of physiochemical processes, such as membrane technologies, which present high costs and problems of fouling when used in raw wastewater, since it removes suspended solids;
- The reactions resulting from the addition of strong acids and agitation systems are very rapid, occurring for times less than or equal to 3 minutes, making the general process also very fast;
- It is easily implemented on an industrial scale, without the need for specialized manpower or sophisticated installations;
- The sedimentation stage is fast with a time of about 2 hours and occurs due to gravity, which reduces costs;
- The reduction of contamination in terms of total and dissolved COD, chemicals such as phosphorus, calcium and magnesium, turbidity, total phenols and characteristic absorbances is very significant and efficient;
- Treated wastewater and precipitates obtained can be used for agricultural activities or subjected to membrane processes;
- The volume and amount of moisture of the generated precipitates can be reduced by inexpensive and economical physical processes, such as by centrifugation and drying in sand filters;
- The strong acids used in this process are readily available and often used in the chemical industry.

### Description of the figures

**Figure 1****.** Efficiency of the process of the invention applied to the treatment of wastewater from slaughterhouse, with addition of H₂SO₄ at different pH values, wherein:
   Fig. 1A represents pH and conductivity,
   Fig. 1B represents Ca²⁺, Mg²⁺, OH⁻, CO₃²⁻ and HCO₃⁻,
   Fig. 1C represents total phenols and total phosphorus,
   Fig. 1D represents absorbances at 220, 254, 410 and 600 nm,
   Fig. 1E represents CQO and turbidity, and
   Fig. 1F represents the volume of sludge.
**Figure 2****.** Efficiency of the process of the invention applied to the treatment of wastewater from slaughterhouse, with addition of HCl at different pH values, wherein:
   Fig. 2A represents pH and conductivity,
   Fig. 2B represents Ca²⁺, Mg²⁺, OH⁻, CO₃²⁻ and HCO₃⁻,
   Fig. 2C represents total phenols and total phosphorus,
   Fig. 2D represents absorbances at 220, 254, 410 and 600 nm,
   Fig. 2E represents CQO and turbidity, and
   Fig. 2F represents the volume of sludge.
**Figure 3****.** Efficiency of the process of the invention applied to the treatment of wastewater from slaughterhouse, with addition of HNO₃ at different pH values, wherein:
   Fig. 3A represents pH and conductivity,
   Fig. 3B represents Ca²⁺, Mg²⁺, OH⁻, CO₃²⁻ and HCO₃⁻,
   Fig. 3C represents total phenols and total phosphorus,
   Fig. 3D represents absorbances at 220, 254, 410 and 600 nm,
   Fig. 3E represents CQO and turbidity, and
   Fig. 3F represents the volume of sludge.
**Figure 4****.** Efficiency of the process of the invention applied to the treatment of wastewater from wine producing facilities with addition of H₂SO₄ at different pH values, wherein:
   Fig. 4A represents pH and conductivity,
   Fig. 4B represents HCO₃⁻ and OH⁻,
   Fig. 4C represents total phenols and total phosphorus (TP),
   Fig. 4D represents absorbances at 220, 254, 410 and 600 nm,
   Fig. 4E represents CQO and turbidity, and,
   Fig. 4F represents Ca²⁺ and Mg²⁺.
**Figure 5****.** Efficiency of the process of the invention applied to the treatment of wastewater from wine producing facilities with addition of HCl at different pH values, wherein:
   Fig. 5A represents pH and conductivity,
   Fig. 5B represents HCO₃⁻ and OH⁻,
   Fig. 5C represents total phenols and total phosphorus (TP),
   Fig. 5D represents absorbances at 220, 254, 410 and 600 nm,
   Fig. 5E represents CQO and turbidity, and
   Fig. 5F represents Ca²⁺ and Mg²⁺.
**Figure 6****.** Efficiency of the process of the invention applied to the treatment of wastewater from wine producing facilities with addition of HNO₃ at different pH values, wherein:
   Fig. 6A represents pH and conductivity,
   Fig. 6B represents HCO₃⁻ and OH⁻,
   Fig. 6C represents total phenols and total phosphorus (TP),
   Fig. 6D represents absorbances at 220, 254, 410 and 600 nm,
   Fig. 6E represents CQO and turbidity, and
   Fig. 6F represents Ca²⁺ and Mg²⁺.
**Figure** 7. Characterization of the effluent treated by the process of the invention applied to the treatment of waste water from cheese industries with addition of H₂SO₄ at different pH values, wherein:
   Fig. 7A represents pH and conductivity,
   Fig. 7B represents CQO, total phosphorus (TP), turbidity and total phenols,
   Fig. 7C represents Ca²⁺, Mg²⁺, CO₃²⁻, HCO₃⁻ and OH⁻, and
   Fig. 7D represents absorbances at 220, 254, 410 and 600 nm.
**Figure 8****.** Characterization of the effluent treated by the process of the invention applied to the treatment of waste water from cheese industries with addition of HCl at different pH values, wherein:
   Fig. 8A represents pH and conductivity,
   Fig. 8B represents CQO, total phosphorus (TP), turbidity and total phenols,
   Fig. 8C represents Ca²⁺, Mg²⁺, CO₃²⁻, HCO₃⁻ and OH⁻, and
   Fig. 8D represents absorbances at 220, 254, 410 and 600 nm.
**Figure 9****.** Characterization of the effluent treated by the process of the invention applied to the treatment of waste water from cheese industries with addition of HNO₃ at different pH values, wherein:
   Fig. 9A represents pH and conductivity,
   Fig. 9B represents CQO, total phosphorus (TP), turbidity and total phenols,
   Fig. 9C represents Ca²⁺, Mg²⁺, CO₃²⁻, HCO₃⁻ and OH⁻, and
   Fig. 9D represents absorbances at 220, 254, 410 and 600 nm.
**Figure 10****.** Characterization of the effluent treated by the process of the invention applied to the treatment of waste water from olive oil presses with addition of H₂SO₄ at different pH values, wherein:
   Fig. 10A represents pH and conductivity,
   Fig. 10B represents CQO, total phosphorus (TP), turbidity and total phenols,
   Fig. 10C represents Ca²⁺, Mg²⁺, CO₃²⁻, HCO₃⁻ and OH⁻, and
   Fig. 10D represents absorbances at 220, 254, 410 and 600 nm.
**Figure 11****.** Characterization of the effluent treated by the process of the invention applied to the treatment of waste water from olive oil presses with addition of HCl at different pH values, wherein:
   Fig. 11A represents pH and conductivity,
   Fig. 11B represents CQO, total phosphorus (TP), turbidity and total phenols,
   Fig. 11C represents Ca²⁺, Mg²⁺, CO₃²⁻, HCO₃⁻ and OH⁻, and
   Fig. 11D represents absorbances at 220, 254, 410 and 600 nm.
**Figure 12****.** Characterization of the effluent treated by the process of the invention applied to the treatment of waste water from olive oil presses with addition of HNO₃ at different pH values, wherein:
   Fig. 12A represents pH and conductivity,
   Fig. 12B represents CQO, total phosphorus (TP), turbidity and total phenols,
   Fig. 12C represents Ca²⁺, Mg²⁺, CO₃²⁻, HCO₃⁻ and OH⁻, and
   Fig. 12D represents absorbances at 220, 254, 410 and 600 nm.
**Figure 13****.** Process of treatment of agro-industrial waste water, according to the present invention, wherein:
   1. Represents a concentrated solution of strong acids, preferably sulfuric, hydrochloric or nitric acid;
   2. Represents the addition of concentrated solutions of strong acids to a pH value equal or less than 6 to raw waste water from slaughterhouses, olive oil presses, cheese industries or wine producing facilities, with rapid or strong agitation (1200-1400 rpm) at ambient pressure and at room temperature in presence of light and atmospheric air producing particle agglomerates;
   3. Represents mixing the waste water and concentrated solution of strong acids subjected to a rapid or strong stirring system of 1200-1400 rpm for about 1 minute, with formation of larger particle agglomerates monitored by water turbidity;
   4. Represents mixing the waste water and concentrated solution of strong acids subjected to a medium velocity stirring system of 700-800 rpm for about 1 minute, with formation of larger particle agglomerates monitored by water turbidity;
   5. Represents mixing the waste water and concentrated solution of strong acids subjected to a low velocity stirring system of 300-400 rpm for about 1 minute, with formation of larger particle agglomerates monitored by water turbidity;
   6. Represents the sedimentation of the particle agglomerates formed, for about 2 hours, defining two phases: supernatant or treated water and precipitate or sludge;
   7. Represents the separation of the phases formed in 6.

### Detailed description of the invention

The present invention relates to a process for the treatment of agro-industrial waste water, preferably from slaughterhouses, olive oil presses, cheese industries or wine producing facilities by reaction of acidification with the addition of strong acids, selected from sulfuric, hydrochloric or nitric acid.

In the scope of the present invention, the term "strong acid" means "an acid which is completely ionised in aqueous solution at constant temperature and pressure, under such conditions having a concentration equal to the concentration of hydrogen ions with a dissociation constant or acidity constant pKa of less than 2.

These acids are added to the water to be treated in aqueous solution of different concentrations in order to achieve solutions with pH values of 6 or less, so that the mixing solution has a pH in the range of 1 to 6, preferably in the range of 3 to 6, more preferably in the range of 4 to 6.

The addition of any of these strong acids to the waters to be treated is carried out under agitation conditions, in particular under agitation conditions at three different speeds and in a sequential decreasing order:
(a) Initially a high-speed stirring is promoted, varying from 1200 to 1400 rpm, for about 1 minute, to allow the homogenization and reaction between the acid and the wastewater with increasing turbidity of the water;
(b) In a second step, the stirring speed is reduced to a medium speed, ranging from 700 to 800 rpm, for about 1 minute to allow increasing the turbidity of the wastewater; and finally
(c) In a third step, the stirring speed is reduced for a slow stirring velocity, ranging from 300-400 rpm, for about 1 minute to allow increasing the turbidity of the wastewater.

Thereafter, a sedimentation step is promoted for about 2 hours. After sedimentation, the phases are ready to be separated.

The application of the different stages in this process, as described above, for the treatment of waste water originated in agro-industries, reduces the level of contamination in terms of organic matter, including dissolved organic matter, monitored by chemical oxygen demand (COD total and dissolved), chemicals such as phosphorus, calcium and magnesium, turbidity, total phenols and the characteristic absorbances of this type of waste water.

Analysis of several wastewater samples treated with the process of the present invention has shown that the reduction of the level of contamination in terms of organic matter monitored by the total COD (maximum value = 97.7%) and dissolved can be achieved (maximum value = 98.3%), calcium (maximum value = 100%), magnesium (maximum value = 73%), turbidity (maximum value = 100%), total phenols maximum = 99.3%) and characteristic absorbances (220, 254, 410 and 600 nm) (maximum value = 100%).

In addition, it results in the formation of precipitates rich in organic matter and nutrients, which can be recovered and reused for example in agriculture.

In short, the process of the present invention, for application in the treatment of waste water from agro-industries, comprises the following steps:
a) Acidification, by the addition of a solution of an acid with pKa equal or less than 2, to a determined volume of waste water to be treated until a pH value of the mixing solution is of 1 to 6, being the added acid selected from sulfuric acid, hydrochloric or nitric acid, under stirring conditions, which takes place in three phases, each with a kind of decreasing speed, wherein:
   - in the first stage, the stirring velocity ranges from approximately 1200 to 1400 rpm and lasts about 1 minute,
   - in the second stage, the stirring velocity ranges from approximately 700 to 800 rpm and lasts for about 1 minute, and
   - in the third and last agitation stage, the velocity ranges from approximately 300-400 rpm, for about 1 minute,
b) Sedimentation of the resulting solution in (a), the sludge and supernatant, during at least about 2 hours.

### Examples

### Example 1. Physico-chemical characteristics of raw waste water

The wastewater analysed was collected from several agro-industry facilities located in the Baixo Alentejo area of Portugal. Table 1 presents the most relevant values that characterize the waste water from slaughterhouse, olive oil presses, cheese industries or wine producing facilities, and this analysis was done in untreated water, also called raw waste water.

**Table 1. Physico-chemical characteristics of raw waste water from agro-industries**

| **Parameter** | **Unit** | **Cheese** | **Olive oil** | **Slaughter** | **Winery** |
|---|---|---|---|---|---|
| **pH** | Sorensen scale | 4.52±0.205 | 4.63±0.142 | 6.89±0.237 | 6.80±0.056 |
| **Conductivity** | dS m⁻¹ | 5.23±0.277 | 2.69±0.133 | 2.96±0.109 | 1.62±0.064 |
| **Turbidity** | NTU | 594.9±49.54 | 280.1±2.63 | 797.8±156.19 | 320.8±145.06 |
| **COD** | mg L⁻¹ | 4917±353.6 | 7910±330.7 | 4660±1040.3 | 2003±423.3 |
| **Dissolved COD** | mg L-1 | - | - | 972±207.9 | 917±136.1 |
| **Phosphorus** | mg L⁻¹ | 3411.8±1255.64 | 1049.7±84.74 | 676.5±90.71 | 210.1±24.34 |
| **Calcium** | mg L⁻¹ | 236.2±28.94 | 210.6±42.55 | 144.9±21.33 | 110.8±12.86 |
| **Magnesium** | mg L⁻¹ | 109.5±36.77 | 73.6±15.86 | 54.7±19.61 | 55.4±14.79 |
| **Total alkalinity** | mg L⁻¹ CaCO₃ | 1339.7±251.14 | 2039.2±344.81 | 884.5±96.11 | 700.7±48.06 |
| **Bicarbonates** | mg L⁻¹ CaCO₃ | 1339.7±251.14 | 2039.2±344.81 | 884.5±96.11 | 700.7±48.06 |
| **Total Hardness** | mg L⁻¹ CaCO₃ | 1039.7±168.69 | 970.5±470.86 | 586.4±120.58 | 504.3±49.90 |
| **Calcium hardness** | mg L⁻¹ CaCO₃ | 589.3±72.19 | 525.5±106.16 | 361.5±53.22 | 276.5±32.08 |
| **Magnesium hardness** | mg L⁻¹ CaCO₃ | 450.4±151.30 | 445.0±435.54 | 224.9 80.72 | 227.8±60.83 |
| **Total phenols** | mg L⁻¹ | 75.9±6.76 | 540.4±50.42 | 34.8±10.19 | 27.8±3.01 |

| **Absorbances** | | | | | |
|---|---|---|---|---|---|
| **220 nm** | cm⁻¹ | 0.639±0.0383 (1:50) | 1.027±0.0994 (1:50) | 0.184±0.0473 (1:50) | 0.143±0.0397 (1:50) |
| **254 nm** | cm⁻¹ | 0.180±0.0147 (1:50) | 0.366±0.0637 (1:50) | 0.093±0.0315 (1:50) | 0.093±0.0317 (1:50) |
| **410 nm** | cm⁻¹ | 0.092±0.0065 (1:50) | 0.076±0.0140 (1:50) | 0.047±0.0152 (1:50) | 0.033±0.0161 (1:50) |
| **600 nm** | cm⁻¹ | 0.060±0.0072 (1:50) | 0.031±0.0054 (1:50) | 0.054±0.0198 (1:25) | 0.067±0.0059 (1:20) |

| | | | | | |
|---|---|---|---|---|---|
| COD = chemical oxygen demand (total or dissolved) | | | | | |

### Example 2. Effect of the application of different agitation systems in the treatment of waste water from slaughterhouses

Analysis were performed where different agitation systems were applied to the process of treatment of wastewater from slaughterhouses. All studies were conducted under the same conditions except for the stirring conditions, namely the velocity of stirring.

Strong acid solutions were added to the waste water from slaughterers until a pH value of approximately 6 in the mixing solution was achieved under the agitation conditions described in Table 2. The analysis were conducted at room temperature and pressure and in the presence of atmospheric air and light.

After interruption of the stirring systems, sedimentation of the agglomerates of the particles was verified for a time of at least to 2 hours and finally the two phases resulting phases were separated. The processes were monitored by total and dissolved COD measurement.

Table 2 shows the process conditions with the application of 5 different stirring systems, in which:

### A. Inventive Example:

The process of the present invention comprising applying three sequential stirring systems (1200-1400 rpm min⁻¹, 700-800 rpm min⁻¹ and 300-400 rpm min⁻¹) for about 1 minute each;

### B. Comparative Example:

A process comprising applying a conventional high velocity agitation system (1200-1400 rpm min-1) for about 3 minutes;

### C. Comparative Example:

A process comprising the application of two stirring systems, the first at high velocity and the second the intermediate velocity (1200-1400 rpm min⁻¹ and 700-800 rpm min⁻¹), for about 1.5 minutes each, totalling about 3 minutes of stirring.

### D. Comparative Example:

A process comprising applying a conventional stirring system at an intermediate velocity (700-800 rpm min⁻¹) for about 3 minutes;

### E. Comparative Example:

A process comprising applying a conventional low velocity agitation system (300-400 rpm min⁻¹) for about 3 minutes.

**Table 2. Effects of the application of different agitation systems in wastewater from slaughterhouse in acidification processes with strong acids**

| **Ex.** | **Veloc. (rpm)** | **Time (min)** | **COD (mgL⁻¹)** | **COD DIS (mgL⁻¹)** | **COD (remov. %)** | **COD DIS (remov.%)** |
|---|---|---|---|---|---|---|
| **A INV** | 1200-1400 | 1 | 250 | 201 | 93,6 | 79,3 |
| | 700-800 | 1 | | | | |
| | 300-400 | 1 | | | | |
| **B COMP** | 1200-1400 | 3 | 2361 | 472 | 39,7 | 51,4 |
| **C COMP** | 1200-1400 | 1,5 | 3583 | 650 | 8,5 | 33,1 |
| | 700-800 | 1,5 | | | | |
| **D COMP** | 700-800 | 3 | 850 | 517 | 78,3 | 46,8 |
| **E COMP** | 300-400 | 3 | 583 | 550 | 85,1 | 43,4 |

| | | | | | | |
|---|---|---|---|---|---|---|
| COD DIS = COD dissolved Remov.% = % of COD removed | | | | | | |

As shown in Table 2, the application of the different agitation systems results in different degrees of efficiency of removal of contaminants in wastewater from slaughterhouses.

Thus, the system of the present invention has an unexpected advantageous effect of significantly reducing the organic matter, especially the dissolved organic matter, i.e. significant reduction of the dissolved COD by about 79% and the total COD by about 94%, which did not happen with the application of other agitation systems.

### Example 3. Effect of the application of different agitation systems in the treatment of waste water from wineries

Studies were carried out in which different agitation systems were applied to the process of wastewater treatment from wineries. All the studies were carried out under the same conditions as those mentioned in Example 2, except for the origin of the waste water.

In the same way 5 different stirring systems were tested, where A, B, C, D and E correspond to systems identical to those mentioned in Example 2, i.e. A corresponds to one of the embodiments of the invention (Inv. = Inventive Example) and the remainder to Comparative Examples (COMP).

**Table 3. Effects of the application of different agitation systems in wastewater from wineries in acidification processes with strong acids.**

| **Ex.** | **Veloc. (rpm)** | **Time (min)** | **COD (mgL⁻¹)** | **COD DIS (mgL⁻¹)** | **COD (remov. %)** | **COD DIS (remov.%)** |
|---|---|---|---|---|---|---|
| **A INV** | 1200-1400 | 1 | 423 | 217 | 71,8 | 76,3 |
| | 700-800 | 1 | | | | |
| | 300-400 | 1 | | | | |
| **B COMP** | 1200-1400 | 3 | 350 | 317 | 76,7 | 65,4 |
| **C COMP** | 1200-1400 | 1,5 | 454 | 350 | 69,7 | 61,8 |
| | 700-800 | 1,5 | | | | |
| **D COMP** | 700-800 | 3 | 450 | 450 | 70,0 | 50,9 |
| **E COMP** | 300-400 | 3 | 397 | 400 | 73,5 | 56,4 |

| | | | | | | |
|---|---|---|---|---|---|---|
| COD DIS = COD dissolved Remov.% = % of COD removed | | | | | | |

As in the previous example, also in the case of the application of the process of the invention to the treatment of waste water from wineries, a substantial reduction of the contamination has occurred.

It was observed that a higher amount of COD dissolved was removed with the application of three sequential stirring systems (1200-1400 rpm min⁻¹, 700-800 rpm min⁻¹ and 300-400 rpm min⁻¹) according to the present invention in comparison to other agitation conventional systems, i.e. the application of three agitation systems in the acidification processes with strong acids had an unexpected effect of acting more efficiently on the dissolved COD than the other agitation systems.

### Example 4. Application of acidification processes with strong acids in four raw waste waters

The proposed processes reduce the level of contamination in terms of characteristic absorbances, turbidity, COD, phosphorus, calcium, magnesium and total phenols.

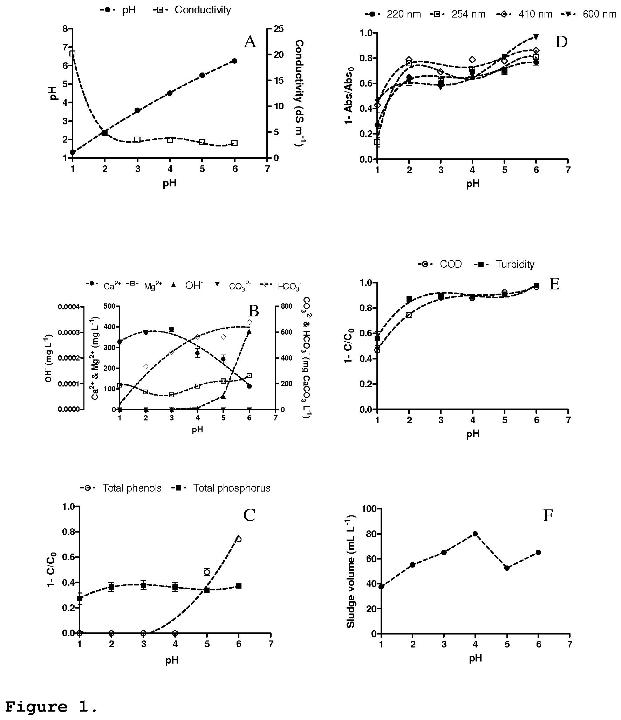

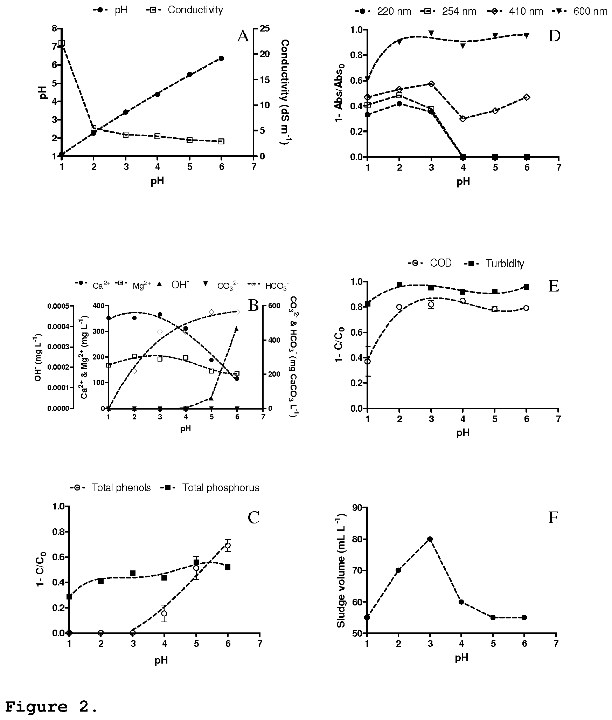

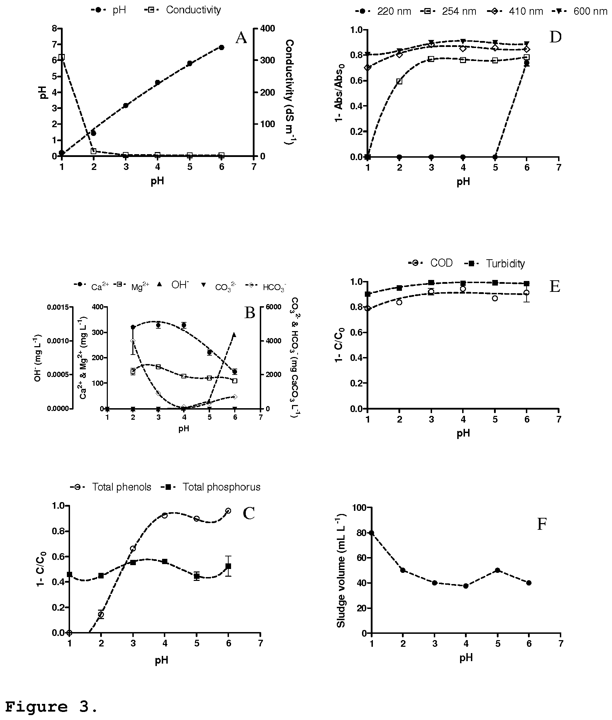

Figure 1, 2 and 3 show examples of the application of these processes to raw agro-industrial wastewater from slaughterhouse under different pH conditions (values of approximately 1, 2, 3, 4, 5 and 6) and with addition of different types of acids: H₂SO₄, HCl or HNO₃.

The application of the proposed processes (example: H₂SO₄, pH = 5.0) in the raw waste water from the slaughterhouse allowed the reduction of the following contamination indicators: COD (92.5%), phosphorus (34.1%), turbidity (91.1%), total phenols (48.1%) and characteristic absorbances (69.4-80.9%).

The application of another embodiment of the present invention, for example with a pH value of the mixed solution of about 6.0 by adding HCl to the raw wastewater from slaughterhouse, allowed the following contamination indicators to be reduced: COD (79.1%), phosphorus (52.1%), calcium (20.3%), turbidity (95.9%), total phenols (69.1%) and characteristic absorbances (46.9-95.2 %).

In still another embodiment of the present invention (example: HNO₃, pH = 4.0) in the raw wastewater from slaughterhouse, the following contamination indicators were reduced: COD (94.3%), phosphorus (56.2%), calcium (33.4%), turbidity (98.8%), total phenols (92.2%) and characteristic absorbances (76.1-90.7%).

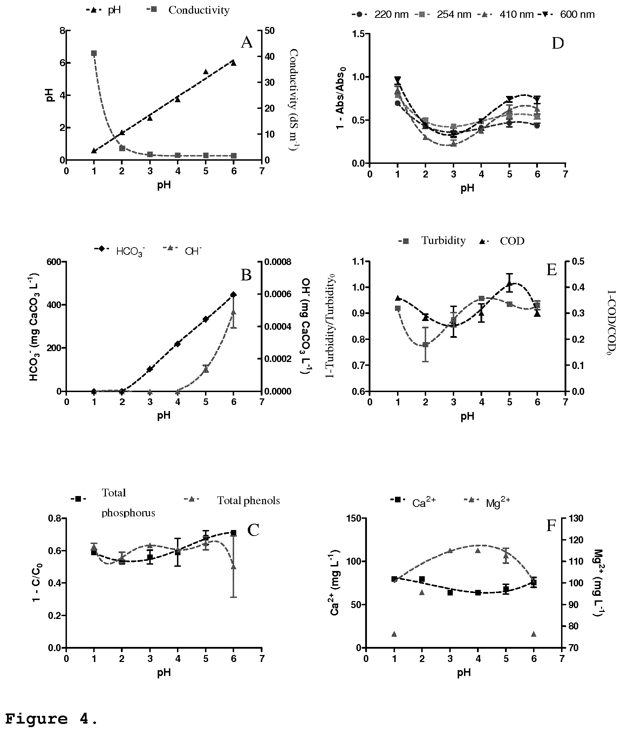

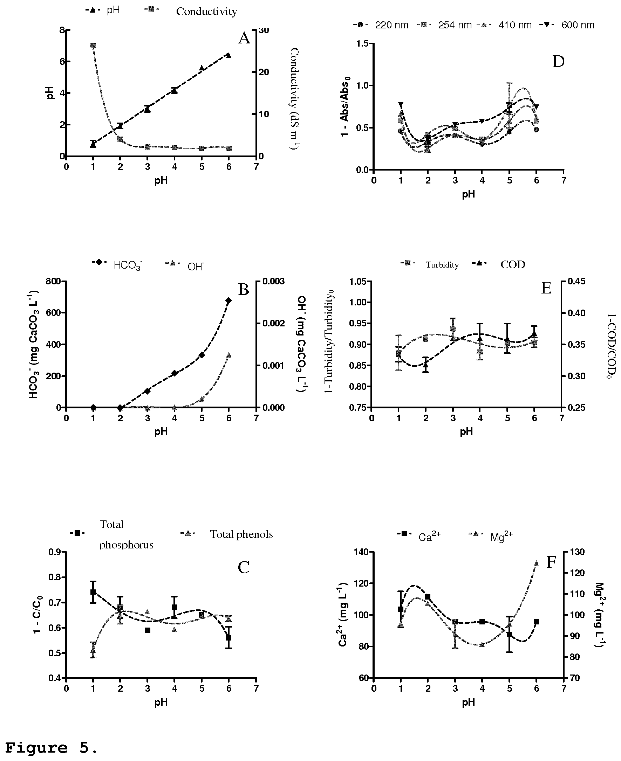

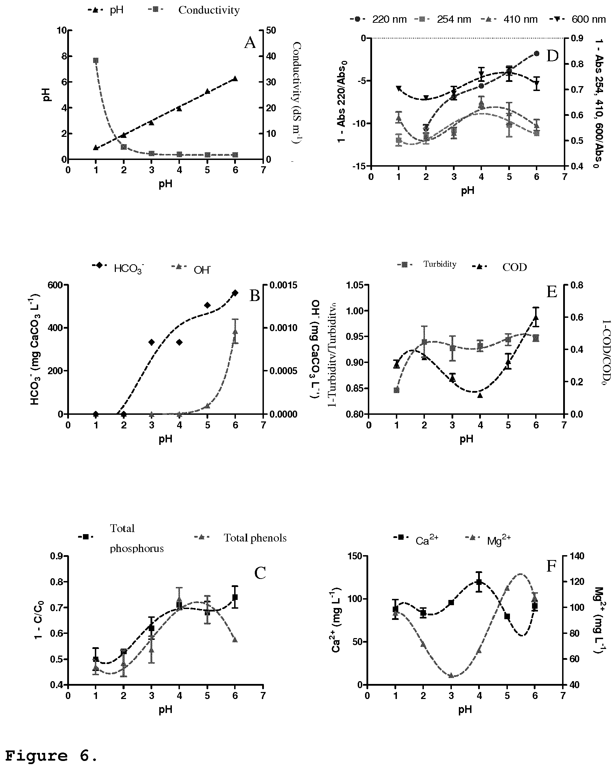

Figures 4, 5 and 6 show examples of the application of these treatment processes to raw agro-industrial wastewater from the wineries at different pH conditions (1, 2, 3, 4, 5 and 6) and with different types of acids (H₂SO₄, HCl and HNO₃) .

The application of another embodiment of the present invention (example: H₂SO₄, pH = 5.0) to the waste water from wineries allowed the reduction of COD (41.8%), phosphorus (68.1%), calcium , (9%), turbidity (93.5%), total phenols (67.8%) and characteristic absorbances (46.7-74.0%).

The application of another embodiment of the present invention (example: HCl, pH = 6.0) to the waste water from wineries allowed the reduction of COD (36.8%), phosphorus (56.0%), calcium, turbidity (90.5%), total phenols (66.8%) and characteristic absorbances (47.7-74.8%).

The application of another embodiment of the present invention (example: HNO₃, pH = 5.0) to the waste water from the wineries allowed the reduction of COD (32.6%), phosphorus (68.1%), calcium (1%), turbidity (94.4%), total phenols (71.9%) and characteristic absorbances (56.0-76.0%).

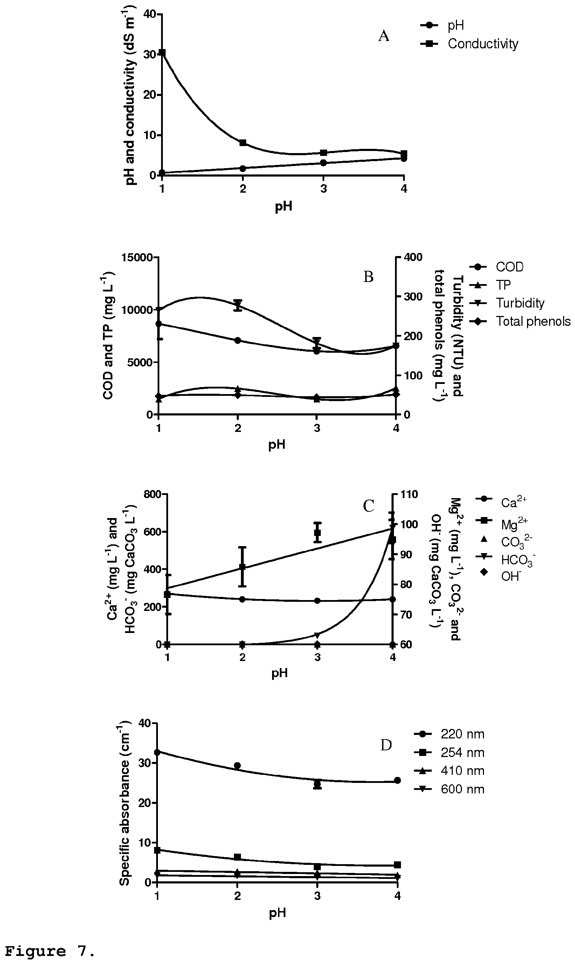

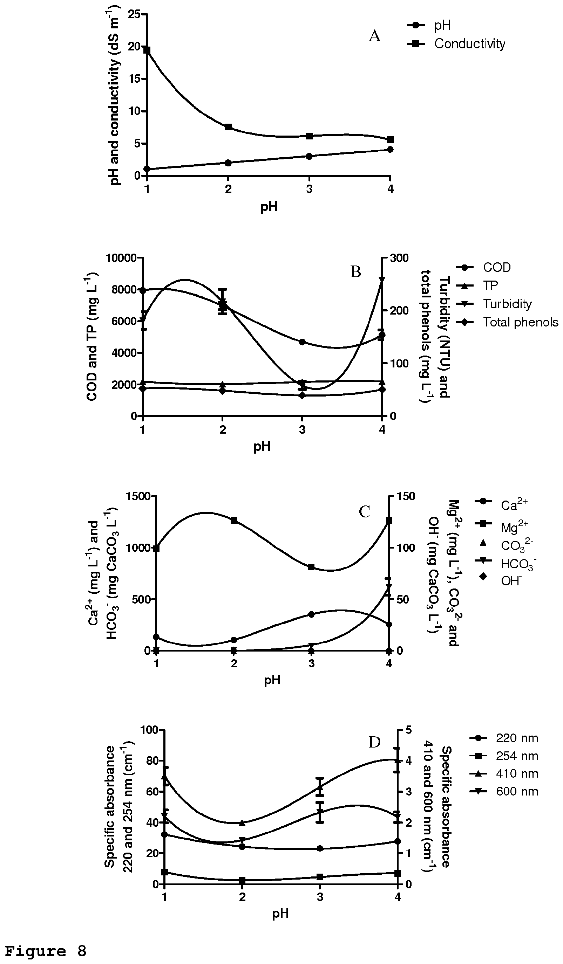

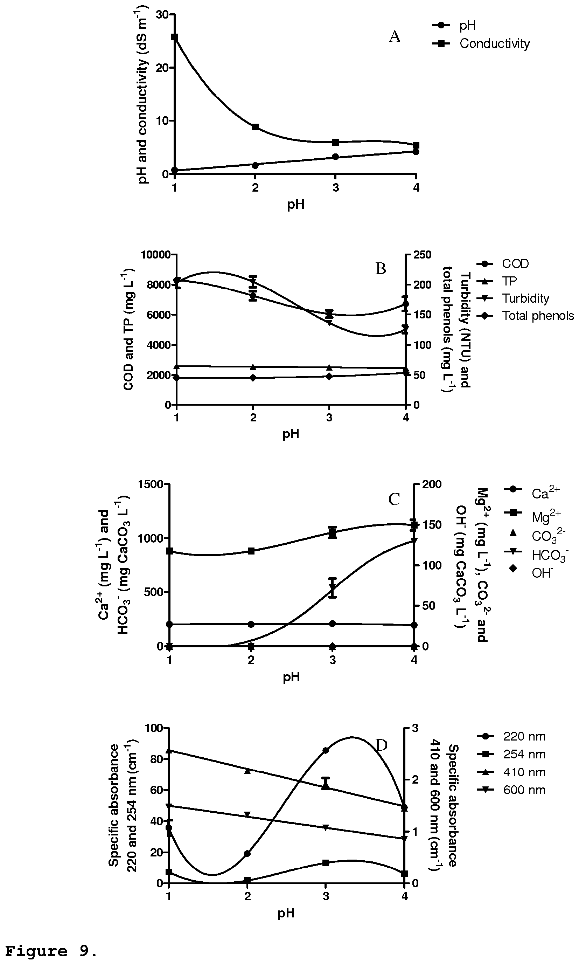

Figure 7, 8 and 9 show examples of the application of the process of the present invention to raw agro-industrial wastewater from cheese industries under different pH conditions (values of approximately 1, 2, 3 and 4) and with different types of acids (H₂SO₄, HCl and HNO₃) .

The application of another embodiment of the present invention (example: H₂SO₄, pH = 3.0) to the waste water from cheese industries allowed the reduction of phosphorus (57.0%), magnesium (14.1%), turbidity (5%), total phenols (44.1%) and characteristic absorbances (22.6-55.4%).

The application of another embodiment of the present invention (example: HCl, pH = 2.0) to the waste water from cheese industries allowed the reduction of phosphorus (40.9%), calcium (55.4%), turbidity (6%), total phenols (38.8%) and characteristic absorbances (23.8-71.7%).

The application of another embodiment of the present invention (example: HNO₃, pH = 4.0) to the waste water from cheese industries allowed the reduction of phosphorus (28.0%), calcium (17.2%), turbidity (9%), total phenols (31.9%) and characteristic absorbances (32.9-71.6%).

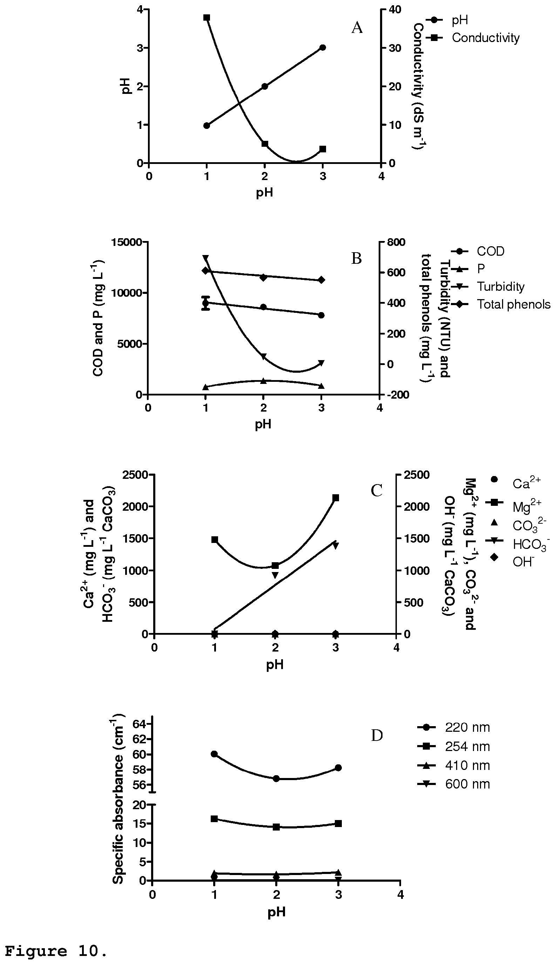

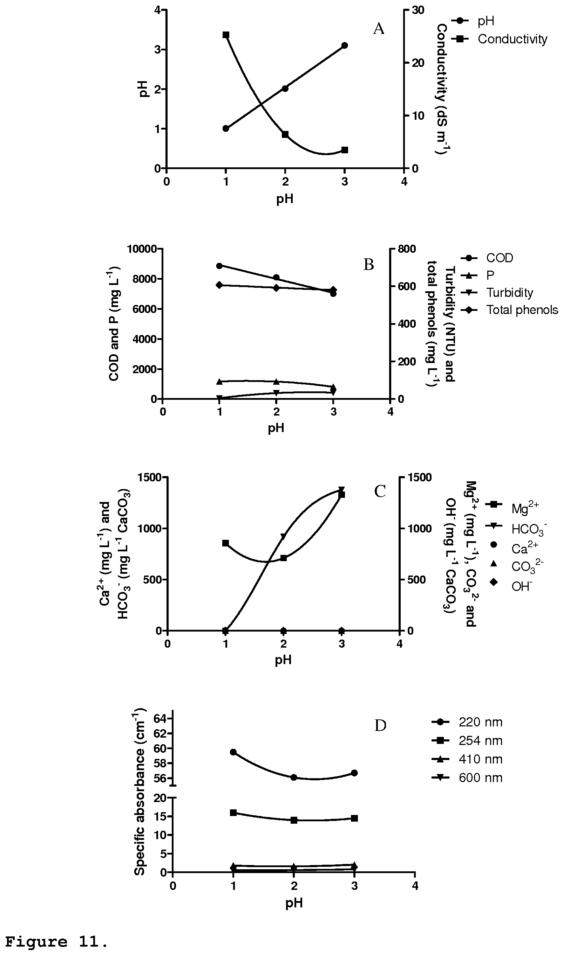

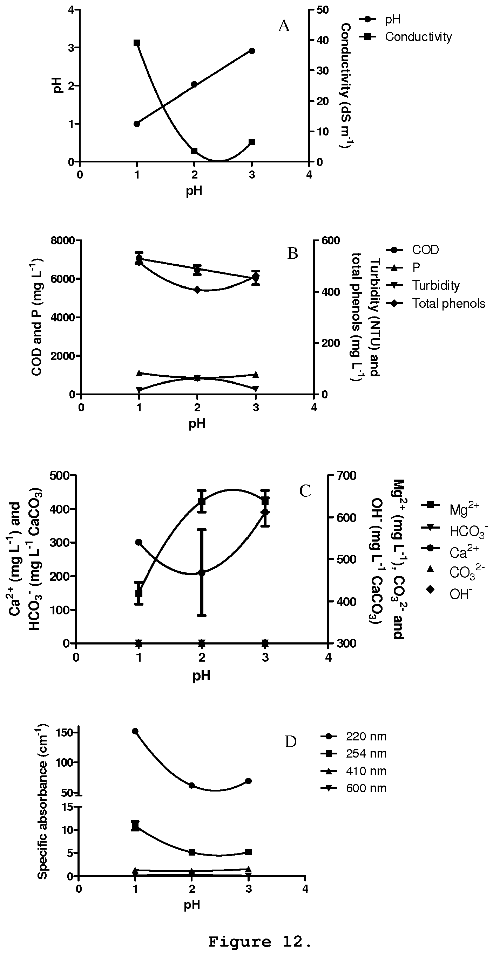

Figures 10, 11 and 12 show examples of the application of various embodiments of the process of the present invention to raw agro-industrial waste water from olive oil presses at different pH conditions (values of approximately 1, 2 and 3) and with addition of different types of acids (H₂SO₄, HCl and HNO₃).

The application of another embodiment of the present invention (example: H₂SO₄, pH = 1.0) to the waste water from olive oil presses allowed the reduction of phosphorus (26.9%), calcium (100%) and characteristic absorbances (10.9-94.2%).

The application of the process of the invention (example: HCl, pH = 3.0) to the waste water from olive oil presses allowed the reduction of phosphorus (22.1%), calcium (100%), turbidity (87.8%) and absorbances characteristics (20.7-47.4%).

The application of the process of the invention (example: HNO₃, pH = 3.0) to the wastewater from olive oil presses allowed a reduction of COD (23.6%), turbidity (92.8%), total phenols (14.4%) and characteristic absorbances (59.1-91.4%).

### Example 5. Physiochemical properties of waste water treated by acid addition with strong acid addition

The characteristics of the treated wastewater obtained in acidification processes with the addition of strong acids were monitored through the following parameters: pH, electrical conductivity, characteristic absorbances (220, 254, 410 and 600 nm), turbidity, COD, total hardness and calcium hardness, calcium, magnesium, phosphorus, total and methyl orange alkalinity, carbonates, bicarbonates, hydroxides and total phenols.

Table 4 summarizes examples of physicochemical characteristics of treated wastewater obtained in the acidification processes with strong acids applied to raw agro-industrial waste water.

The application of strong acids to the raw effluents originated waste water treated with acidic properties. Additionally, there is a slight increase in the level of salinity monitored by the electrical conductivity in the treated wastewater, in relation to the raw waste water.

The treated wastewater had a COD content of less than 4683 mg L⁻¹, being rich in chemicals such as phosphorus, calcium and magnesium.

The alkalinity present is in the form of bicarbonates. The hardness of the water is mainly due to the presence of calcium and magnesium. On the other hand, treated wastewater presents reduced content of total phenols compared to raw wastewater.

**Table 4. Physiochemical characteristics of treated waste water obtained in acidification processes with strong acids**

| **Parameter** | **Unit** | **Cheese** | **Slaughter** | **Wineries** |
|---|---|---|---|---|
| **pH** | Sorensen scale | 2.99±0.045 | 5.48±0.000 | 5.30±0.066 |
| **Conductivity** | dS m⁻¹ | 6.15±0.007 | 3.08±0.000 | 1.75±0.003 |
| **Turbidity** | NTU | 57.9±7.42 | 70.8±0.68 | 17.98±3.615 |
| **COD** | mg L⁻¹ | 4683±0.00 | 350±47.1 | 1350±94.3 |
| **Dissolved COD** | mg L⁻¹ | - | 201+17.5 | 217+47.1 |
| **Phosphorus** | mg L⁻¹ | 2143.1±41.59 | 445.5±11.93 | 67.1±8.95 |
| **Calcium** | mg L⁻¹ | 353.5±10.64 | 245.0±19.73 | 79.7±0.00 |
| **Magnesium** | mg L⁻¹ | 77.5±0.00 | 136.6±11.97 | 111.2±0.00 |
| **Total alkalinity** | mg L⁻¹CaCO₃ | 0.0±0.00 | 459.5 | 459.5±0.00 |
| **Bicarbonates** | mg L⁻¹CaCO₃ | 0.0±0.00 | 459.5 | 459.5±0.00 |
| **Total Hardness** | mg L⁻¹CaCO₃ | 1201.1±26.54 | 1173.4±0.00 | 656.5±0.00 |
| **Calcium hardness** | mg L⁻¹CaCO₃ | 882.0±26.54 | 611.3±49.29 | 198.9±0.00 |
| **Magnesium hardness** | mg L⁻¹CaCO₃ | 319.0±0.00 | 562.0±49.24 | 457.5±0.00 |
| **Total phenols** | mg L⁻¹ | 39.4±0.95 | 0.01±0.009 | 7.8±1.36 |

| **Absorbances** | | | | |
|---|---|---|---|---|
| **Abs 220 nm** | cm⁻¹ | 0.462±0.0184 (1:50) | 0.056±0.0057 (1:50) | 0.691±0.0728 (1:50) |
| **Abs 254 nm** | cm⁻¹ | 0.093±0.0021 (1:50) | 0.027±0.0021 (1:50) | 0.041±0.0042 (1:50) |
| **Abs 410 nm** | cm⁻¹ | 0.063±0.0057 (1:50) | 0.011±0.0007 (1:50) | 0.0130±0.0014 (1:50) |
| **Abs 600 nm** | cm⁻¹ | 0.047±0.0064 (1:50) | 0.257±0.0014 (1:1) | 0.007±0.0007 (1:50) |

| | | | | |
|---|---|---|---|---|
| COD - Chemical oxygen demand | | | | |

### Example 6. Formation of precipitates with reusable and recoverable compounds

The proposed physiochemical treatment originated the formation of precipitates with different characteristics according to the type of water, applied process and operational conditions.

Table 5 shows some examples of the volume generated during the application of strong acid acidification processes. After sedimentation, 12.5 to 120 mL of precipitate per litre of effluent was obtained.

The volume of precipitate can be reduced by economical and accessible physicochemical processes, such as centrifugation and drying in sand filters, is presented in Table 5.

**Table 5. Volume of precipitate obtained in acidification processes with strong acids**

| **Parameter** | **Units** | **Volume** |
|---|---|---|
| Cheese | mL L⁻¹ efluent | 25-110 |
| Slaughter | mL L⁻¹ efluent | 37.5-120 |
| Olive oil | mL L⁻¹ efluent | 25-62.5 |
| Wineries | mL L⁻¹ efluent | 12.5-100 |

Table 6 shows examples of the characteristics presented by the precipitates obtained during the acidification processes with strong acids. The obtained precipitates present about 90% of dry matter and organic matter, being also rich in chemicals such as calcium, magnesium, phosphorus, chloride, sodium and potassium. These elements can be recovered and reused, as nutrients for example, in agriculture.

**Table 6. Characteristics of the precipitates obtained in acidification processes with strong acids in slaughterhouse wastewater.**

| **Parameter** | **Units** | **HCl** | **H₂SO₄** | **HNO₃** |
|---|---|---|---|---|
| **Sludge volume** | mL L⁻¹ | 45.0±4.36 | 59.2±1.44 | 40.3±8.39 |
| **Weight of centrifuged sludge** | g L⁻¹ | 30.6±2.67 | 29.6±2.16 | 33.2±7.26 |
| **Dry weight** | g L⁻¹ | 3.8±0.11 | 3.9±0.30 | 3.5±0.69 |
| **Dry matter** | % | 91.5±0.53 | 91.6±0.33 | 91.7±0.33 |
| **Organic matter (dry sample)** | % | 86.2±0.13 | 85.2±0.18 | 85.9±0.10 |
| **Organic matter (wet sample)** | % | 79.0±0.57 | 78.0±0.44 | 78.8±0.30 |
| **Calcium** | g kg⁻¹ | 77.8±25.57 | 160.0±41.02 | 135.9±9.67 |
| **Magnesium** | g kg⁻¹ | 605.9±106.70 | 287.6±60.69 | 339.5±91.85 |
| **Phosphorus** | g kg⁻¹ | <DL | 0.74±0.472 | 0.98±0.219 |
| **Chloride** | g kg⁻¹ | 25.1±0.02 | 16.8±2.08 | 21.0±1.04 |
| **Sodium** | g kg⁻¹ | 1.53±0.451 | 2.01±0.812 | 2.94±0.603 |
| **Potassium** | g kg⁻¹ | 0.28±0.065 | 0.38±0.153 | 0.50±0.077 |

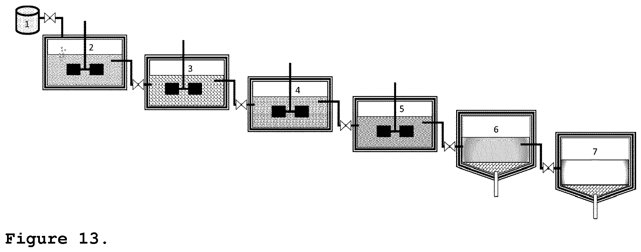

Figure 13 represents the schematic of the physicochemical treatment of agro-industrial waste water by acidification processes with addition of strong acids and formation of precipitates with reusable and recoverable compounds.

## Claims

1. Process for the treatment of wastewater from agro-industries, comprising the following steps:
(a) An acidification step performed by the addition of an aqueous solution of acid selected from sulfuric acid, hydrochloric acid or nitric acid having a *pKa* value of less than 2, to a determined volume of wastewater to be treated until the pH value of the mixed solution achieved is of 1 to 6, and wherein the acid is added under stirring conditions, which takes place in three phases, each of said phases with a decreasing rate of velocity, as the following:
- In the 1^{st} phase, the stirring velocity varies from 1200 to 1400 rpm, during approximately 1 minute;
- In the 2^{nd} phase, the stirring velocity varies from 700 to 800 rpm, during approximately 1 minute;
- In the 3^{rd} phase, the stirring velocity varies from 300 to 400 rpm, during approximately 1 minute;
b) Sedimentation of the resulting solution of (a) during at least about two hours, and
c) Separation of the two phases formed in (b), the precipitate or sludge and the supernatant or treated water.

2. Process according to claim 1, **characterized in that** the waste water is originated by the following agro-industries: wineries, slaughterhouses, cheese factory and olive oil presses.

3. Process according to claim 2, **characterized in that** the waste water is raw waste water, without having undergone any previous treatment.

4. Process according to claim 1, **characterized in that** the sedimentation step (b) lasts for more than 2 hours.

5. A process according to any one of the preceding claims, **characterized in that** the precipitate or sludge and / or the supernatant or treated water resulting from step (c) are collected for later use through agricultural reuse.

## Patentansprüche

1. Verfahren zur Abwasserbehandlung von Agroindustrien umfassend folgende Schritte:
(a) Einen Säuerungsschritt ausgeführt durch den Zusatz von einer wässrigen Lösung von Säure ausgewählt von Schwefelsäure, Salzsäure oder Salpetersäure, die einen pka-Wert von weniger als 2 haben, zu einem bestimmten Volumen von zu behandelndem Abwasser, bis der erreichte ph-Wert der gemischten Lösung von 1 bis 6 ist, und wobei die Säure unter Rührzustände untermischt ist, welche in drei Phasen stattfindet, jede der genannten Phasen mit einer abnehmenden Geschwindigkeit, wie folgt:
- In der 1^{ten} Phase, die Rührgeschwindigkeit ändert sich zwischen 1200 und 1400 rpm, ungefähr 1 Minute lang;
- In der 2^{ten} Phase, die Rührgeschwindigkeit ändert sich zwischen 700 und 800 rpm, ungefähr 1 Minute lang;
- In der 3^{ten} Phase, die Rührgeschwindigkeit ändert sich zwischen 300 und 400 rpm, ungefähr 1 Minute lang.
(b) Sedimentbildung der ergebenen Lösung von (a) während mindestens zwei Stunden, und
(c) Trennung der zwei Phasen gestaltet in (b), der Niederschlag oder Schlamm und das Überstands- oder behandelnde Wasser.

2. Verfahren gemäß Anspruch 1 **dadurch gekennzeichnet, dass** das Abwasser durch die folgenden Agroindustrien entsteht: Weinkellereien, Schlachthäuser, Käsereien und Olivenölpressen.

3. Verfahren gemäß Anspruch 2 **dadurch gekennzeichnet, dass** das Abwasser rohes Abwasser ist, ohne vorhergehende Behandlung.

4. Verfahren gemäß Anspruch 1 **dadurch gekennzeichnet, dass** der Sedimentbildungsschritt (b) länger als 2 Stunden dauert.

5. Ein Verfahren gemäß einer der vorigen Ansprüche **dadurch gekennzeichnet, dass** der Niederschlag oder Schlamm und/ oder das Überstands- oder behandeltes Wasser folgend aus Schritt (c) zur späteren Anwendung mittels landwirtschaftlicher Wiederverwendung gesammelt sind.

## Revendications

1. Processus de traitement des eaux usées issues des agro-industries, comprenant les étapes suivantes :
(a) Étape d'acidification réalisée par l'addition d'une solution aqueuse d'un acide sélectionné d'un acide sulfurique, d'un acide chlorhydrique ou d'un acide nitrique, ayant une valeur pKa inférieure à 2 pour un volume déterminé d'eaux usées à traiter, jusqu'à ce que la valeur pH de solution mélangée atteinte soit comprise entre 1 et 6 et où l'acide est ajoutée dans des conditions d'agitation, qui a lieu au cours de trois phases, où chacune de ces phases ont un taux décroissant de vitesse, comme suit :
- Au cours de la le phase, la vitesse d'agitation varie entre 1200 et 1400 rpm, pendant 1 minute, approximativement ;
- Au cours de la 2e phase, la vitesse d'agitation varie entre 700 et 800 rpm, pendant 1 minute, approximativement ;
- Au cours de la 3e phase, la vitesse d'agitation varie entre 300 et 400 rpm, pendant 1 minute, approximativement ;
b) Sédimentation de la solution qui résulte de (a) pendant au moins deux heures et
c) Séparation des deux phases formées en (b), le précipité ou la boue et le surnageant ou les eaux traitées.

2. Processus selon la revendication 1 **caractérisé par le fait que** les eaux usées proviennent des agro-industries suivantes : exploitations viticoles, abattoirs, usines de fromage et pressoirs d'huile d'olive.

3. Processus selon la revendication 2 **caractérisé par le fait que** les eaux usées sont des eaux résiduaires non traitées, n'ayant subi aucun traitement préalable.

4. Processus selon la revendication 1 **caractérisé par le fait que** la phase de sédimentation (b) dure plus de 2 heures.

5. Processus selon une quelconque revendication précédente, **caractérisé par le fait que** le précipité ou la boue et/ou le surnageant ou les eaux traitées issu(s) de l'étape (c) sont collecté(e/es) pour une utilisation ultérieure à travers la valorisation agricole.
